# EUROPÄISCHE PATENTSCHRIFT

(11) **EP 3 634 708 B1**
(45) Veröffentlichungstag und Bekanntmachung des Hinweises auf die Patenterteilung: **01.06.2022**
(21) Anmeldenummer: 18728419.5
(22) Anmeldetag: 08.06.2018
(51) Int. Cl.: B29B 17/00, B29C 49/00, B29C 49/08, B29B 11/14

(54) **REZYKLIERTE PET-BARRIERE-FLASCHE**
RECYCLED PET-BARRIERE-FLASCHE
BOUTEILLE EN PET-BARRIÈRE RECYCLÉ

(30) Priorität: 08.06.2017 CH 7392017
(43) Veröffentlichungstag der Anmeldung: 15.04.2020
(73) Patentinhaber: ALPLA Werke Alwin Lehner GmbH & Co. KG, 6971 Hard (AT)
(72) Erfinder: SIEGL, Robert, 6850 Dornbirn (AT)
(74) Vertreter: Riederer Hasler & Partner Patentanwälte AG
(86) Internationale Anmeldenummer: PCT/EP2018/065174
(87) Internationale Veröffentlichungsnummer: WO 2018/224652

(56) Entgegenhaltungen:
- WO-A1-2016/130748
- WO-A1-2016/200653
- US-A1- 2013 270 212
- US-A1- 2015 110 983
- US-A1- 2015 141 584
- Greald Michael: "PEF Recycling", Internet , 28. Juni 2018 (2018-06-28), XP002783156, Gefunden im Internet: URL:https://www.synvina.com/wp-content/upl oads/2017/06/Synvina_recycling_June2017.pd f [gefunden am 2018-07-17]
- DE JONG E ET AL: "Furandicarboxylic Acid (FDCA), A Versatile Building Block for a Very Interesting Class of Polyesters", BIOBASED MONOMERS, POLYMERS, AND MATERIALS; [ACS SYMPOSIUM SERIES], AMERICAN CHEMICAL SOCIETY, WASHINGTON, DC, PAGE(S) 1 - 13 , 1. Januar 2012 (2012-01-01), XP002716722, ISBN: 978-0-8412-2767-5 Gefunden im Internet: URL:http://www.researchgate.net/publicatio n/234111253_Furandicarboxylic_acid_(FDCA)_ a_versatile_building_block_for_a_very_inte resting_class_of_polyesters/file/d912f512c 8c9ab0479.pdf [gefunden am 2012-08-16]

## Beschreibung

### Gebiet der Erfindung

Die Erfindung betrifft eine PET-Barriere-Flasche, gemäss Oberbegriff des Anspruchs 1, ein Verfahren zur Herstellung einer PET-Barriere-Flasche gemäss Oberbegriff des Anspruchs 10 und ein Regenerat gemäss dem Anspruch 16.

### Stand der Technik

Kunststoffflaschen, welche grossteils aus Polyethylenterephthalat (Kurz PET) hergestellt werden, sollen zu einem grossen Teil dem Recyclingstrom zugeführt werden und dadurch immer wieder verarbeitet werden.

Eines der Probleme, das sich bei dem wiederholten Rezyklieren ergibt, ist die fortschreitende Vergilbung, Eintrübung und Vergrauung des PET. Bei jedem weiteren Recycling-Zyklus wird das PET gelblicher, trüber und grauer. Durch die Zugabe von blauer Farbe kann der Gelbstich kompensiert werden. Bei dieser Farbkompensation wird das PET jedoch dunkler und grauer. Ein mit fortlaufenden Recyclingstufen kontinuierlich gelber und/ oder dunkler gewordenes PET kann die optischen Anforderungen von hochwertigen Verpackungen nicht mehr erfüllen.

Ein weiteres Problem, das sich mit fortlaufendem Recycling ergibt, ist die steigende Anzahl von Fremdkörpern im Regenerat (Glassplitter, Fremdpolymere, Papier, Holz etc.), welche mit jedem weiteren Zyklus zunimmt. Entweder trüben solche Fremdkörper selbst das PET ein oder sie wirken als Kristallisationskeime, die dazu führen, dass das PET lokal auskristallisiert, wobei die Trübung durch die zusätzliche kristalline Struktur verstärkt wird.

Die Farbe bei PET ist durch die drei Parameter L, a und b bestimmt. Die Paramater werden als L, a, b oder oft auch als L*a*b* dargestellt. Der L*a*b*-Farbraum (auch: Lab-Farben, CIELAB, CIEL*a*b*) beschreibt alle wahrnehmbaren Farben. Zu den wichtigsten Eigenschaften des L*a*b*-Farbmodells zählen die Geräteunabhängigkeit und die Wahrnehmungsbezogenheit, das heißt: Farben werden unabhängig von der Art ihrer Erzeugung oder Wiedergabetechnik so definiert, wie sie von einem Normalbeobachter bei einer Standard-Lichtbedingung wahrgenommen werden. Das Farbmodell ist in der EN ISO 11664-4 "Colorimetry -- Part 4: CIE 1976 L*a*b* Colour space" genormt.

Der Parameter L ist ein Mass für die Dunkelheit des PET. Je höher der L-Wert ist, umso heller ist das PET. PET mit Werten von L<65 sind sehr dunkel und eher grau, wohingegen PET mit Werten von L>85 hell ist. Neu hergestelltes PET ohne Recycling Anteile (sogenanntes Virgin-PET) kann problemlos mit einem L Wert über 85 hergestellt werden, z.B L=89. Es gibt auch graues Virgin PET, mit L Werten unter 85, das Kohlestaub, IR Absorber oder sonstige Additive enthält, die das jungfräuliche PET eintrüben. Jedoch werden diese Typen vermieden, wenn diese in Kombination mit bereits stark eingetrübten PET oder dunklem PET abgemischt werden sollen.

Der b-Wert ist ein Mass für die gelb-blau Verfärbung des PET. Ein vergilbtes PET besitzt beispielsweise einen b-Wert größer 5 (b>5,) welches bei stark vergilbtem PET Werte von b>20 erreichen kann. Ein negativer b-Wert beschreibt das Mass der Blaufärbung des PETs. Virgin-PET hat b-Werte zwischen -3 und 0. Der Blaustich wird über Additive, beispielsweise Kobalt Verbindungen, erzeugt. Virgin-PET wird auf einen Blaustich eingestellt, da es bei der Verarbeitung zwangsläufig gelblicher wird und der b-Wert somit steigt. Der a-Wert ist ein Mass für die rot-grün Verfärbung des PET. Neben der Vergilbung des Regenerats tritt meist auch eine Grünverfärbung des Regenerats auf, die mit roter Farbe kompensiert wird, und bei der Farbkompensation auch das Regenerat dunkler werden lässt, wenn durch die additive Farbmischung der Grünstich unterdrückt werden soll.

Bei jedem Recycling Prozess, welchen das PET durchläuft, sinkt der L-Wert wohingegen der b-Wert und der a-Wert steigen. Das PET wird nicht nur selbst während der Recycling Durchläufe gelblicher, sondern der Gelbstich wird auch durch Verunreinigungen verstärkt, welche während eines Recycling Zyklus das PET kontaminieren.

Um die Qualität der Recycling Ströme akzeptabel zu halten müssen PET-Materialien, welche zu einer zu starken Vergilbung der Recycling Ströme führen würden, herausgefiltert werden oder dürfen erst gar nicht in die Recycling Ströme gelangen.

PET Flaschen können Polyamid in Schichten oder zugemischt enthalten, um eine Barriere gegenüber Sauerstoff und Kohlendioxid aufzuweisen. Solche mit Polyamiden versetzte PET Flaschen wirken sich besonders negativ auf den Gelbstich des Regenerats aus, da Polyamid mit fortlaufender Zeit und erhöhter Temperatur viel stärker vergilbt als PET. Zusätzlich bildet das Polyamid im PET Regenerat kleine Polyamid Domänen aus, die das Licht streuen und so das PET Regenerat zusätzlich eintrüben. Es wird daher versucht, mit Polyamid versetzte PET Flaschen erst gar nicht in den Recycling Strom einzubinden. Solche Flaschen lassen sich durch einen sogenannten Rösttest identifizieren. Bei dem Röstest wird die PET Flasche in einem Backofen ca. 60 min bei 220 °C erhitzt. PET Flaschen ohne Polyamid werden bei dem Rösttest kaum gelblicher, wohingegen PET Flaschen mit Polyamid sehr stark vergilben und Nachdunkeln. Die mit Polyamid versetzten PET Flaschen erreichen bei dem Rösttest b-Werte von bis zu 20.

Zusätzlich wird die Vergilbung von PET Flaschen während des Recyclings verstärkt, wenn in der PET Flasche Katalysatoren vorhanden sind, welche eine Oxidation unterstützend katalysieren. Als Katalysatoren werden hier vor allem Kobaltsalze eingesetzt. Die Oxidation des Verpackungsmaterials führt zu einem Schutz des Füllgutes vor Oxidation, da der Sauerstoff mit der Verpackung reagiert, bevor er mit dem Füllgut reagieren kann.

Entsprechend besteht der Bedarf nach PET Flaschen mit Barriere, die nicht zu gelblich, dunkel oder trüb sind, bzw. Regenerat daraus, das nicht zu gelblich, zu dunkel oder zu trüb ist.

Die Präsentation von Gerald Michael mit dem Titel «PEF Recycling» vom 28. Juni 2017 widmet sich allgemein der Verwendung und dem Recycling von PEF B. Platten, Flaschen und Fasern, die aus einer Mischung aus rPET, 50 Gew.% vPET und einem Anteil von 2 und 5 Gew.% PEF hergestellt wurden, wiesen keine Trübung auf. Die gelb-blau-Verfärbung b* der Produkte lag zwischen b* = 3.2 und 5.3, und der L-Wert zwischen L = 92.9 und 93.4.

Die WO 2016/200653 (D2) setzt sich zum Ziel, neue Kunststoff-Zusammensetzungen bereitzustellen, die im Vergleich zu reinem PET verbesserte Barriereeigenschaften aufweisen und die mit den herkömmlichen Methoden, die bei der Verarbeitung von 100% PET zum Einsatz kommen, verarbeitet werden können. Die Lösung der Aufgabe besteht in einem Verfahren zur Herstellung einer Flasche, bei dem eine Mischung aus Poly(ethylenfurandicarboxylat) und Poly(ethylenterephthalat) (PEF/PET) verwendet wird, wobei die Menge an PEF bezogen auf die Gesamtgewicht der Mischung im Bereich zwischen 0,1 und 40 Gew .-% liegt. Die Herstellung erfolgt dabei unter ähnlichen Verarbeitungsbedingungen, wie sie zur Herstellung einer Standard-PET-Vorform verwendet werden. Die mit der Mischung hergestellte Mischflasche hat im Vergleich zu einer Standard-PET-Flasche verbesserte Barriereeigenschaften. Bei einem Anteil von 10 Gew.% PEF wurde eine Trübung von 3,57% und bei einem Anteil von 20 Gew.% eine solche von nur 1,75% gemessen. Gemäss der D2 kann ein Anteil rPET zum Einsatz kommen.

### Aufgabe der Erfindung

Aus den Nachteilen des beschriebenen Stands der Technik resultiert die die vorliegende Erfindung initiierende Aufgabe ein gattungsgemässen PET-Barriere-Flasche zu zeigen, welche während der Recycling Zyklen weniger stark vergilbt, nachdunkelt oder eintrübt und gleichzeitig eine Barriere gegenüber Sauerstoff und Kohlendioxid aufweist. Es sollen daher PET Flaschen mit Barriere gegenüber Sauerstoff oder Kohlendioxid vorgeschlagen werden, welche sich trotz der Barriere und einem vorhandenen Anteil an rezykliertem PET zum weiteren Recyclen eignen, und deutlich bessere optische Eigenschaften aufweisen als der bisherige Stand der Technik.

### Beschreibung

Als PET-Barriere-Flaschen sollen im Rahmen dieser Patentanmeldung PET-Flaschen gelten, die entweder die Kohlendioxid- oder die Sauerstoff-Barriere gegenüber regulärem PET um mindestens 10% erhöhen oder beide Werte um mehr als 10% erhöhen.

Die Lösung der gestellten Aufgabe gelingt durch die Merkmalskombination gemäss den Ansprüchen 1 und 4. Erfindungsgemäss enthält die PET Flasche ein aliphatisches Furanoat, beispielsweise Polymethylenfuranoat, Polyethylenfuranoat (PEF), Polypropylenfuranoat, Polybuthylenfuranoat oder Polypenthylenfuranoat, oder mehrere unterschiedliche aliphatische Furanoate. Es werden die bei PET-Barriere Flaschen üblichen Additive zur Herstellung der Barriere, nämlich Polyamid und/oder Kobalt Katalysatoren, mit sogenannten aliphatischen Furanoaten (A-Furanoaten), ausgetauscht. Dabei ist der Einsatz von PEF bevorzugt.

Die Barriereflaschen bilden durch die Zugabe von aliphatischen Furanoaten keine Domänen aus, die das Licht streuen, sondern bilden in überraschender Weise mit dem PET Copolymere. Diese Copolymere kristallisieren deutlich langsamer als normales PET Homopolymer, bzw. übliche Copolymere, die 1 bis 6% Isophtalsäure oder 1 bis 3% Diethylenglykol enthalten, und verhindern deutlich die zusätzliche Eintrübung von PET Regeneratflaschen durch PET Kristalle (sogenannte Spheroliten), die an Verunreinigung im PET Regenerat unausweichlich auskristallisieren. Die aliphatischen Furanoate vergilben bei der Verarbeitung deutlich weniger und die finale Flasche ist entweder weniger gelblich, oder, wenn eine Farbkompensation mit rot und blau durchgeführt wird, ist die finale Flasche weniger dunkel (grau).

Gemäss der Erfindung enthält die PET Flasche mehr als 30 Gew.-%, bevorzugt mehr als 40 Gew.-% und besonders bevorzugt mehr als 50 Gew.-% rezykliertes PET. Obwohl die PET-Barriere-Flasche mehr als 50 Gew.-% rezykliertes PET enthalten kann, besitzt die PET Flasche einen b-Wert, welcher kleiner als 5 und einen L-Wert, welcher größer 76 ist. Durch die Zugabe der aliphatischen Furanoate lassen sich PET-Barriere-Flaschen herstellen, welche einen akzeptablen b- und L-Wert haben, obwohl sie rezykliertes PET Material enthalten und eine verbesserte Barriere gegenüber Sauerstoff und Kohlendioxid im Vergleich zu PET Flaschen ohne weitere Zusätze. Dies im Gegensatz zu PET-Barriere-Flaschen gemäss dem Stand der
Technik, welche durch das Rezyklieren einen nicht akzeptablen Gelbstich und eine nicht akzeptable Dunkelheit aufweisen. Zur Messung der Werte des CIELAB-Farbraums wird einer leeren Flasche eine Probe aus dem Flaschenkörper entnommen. Die Entnahmestelle der Probe wird bestimmt, wie folgt. Zunächst werden an der Umfangsfläche des Flaschenkörpers die Punkte bestimmt, an denen aufgelegt sich die leere Flasche ausbalanciert. Diese Punkte ergeben eine umlaufende Linie auf dem Flaschenkörper. Die Probe wird der Stelle entnommen, an der der Flaschenkörper die geringste Krümmung aufweist. Zudem liegt der Schwerpunkt der entnommenen Probe in etwa auf besagter Linie.

In einer weiteren besonders bevorzugten Ausführungsform der Erfindung enthält die PET Flasche zwischen 4 Gew.-% und 40 Gew.-% eines aliphatischen Furanoats oder enthält mehrere unterschiedliche aliphatische Furanoate, wobei deren Summe zwischen 4 Gew.-% und 40 Gew.-% beträgt. Mit diesen Mengen an alifatischen Furanoaten werden PET Flaschen erhalten, welche die Barriere des PETs gegenüber Kohlendioxid und Sauerstoff erhöhen und trotzdem nach der Verarbeitung und dem Rezyklieren b-Werte von kleiner als 5 aufweisen.

Bevorzugt ist es, wenn die PET Flasche weniger als 2 Gew.-% Isophtalsäure enthält. Die Menge an Isophtalsäure, welche als Kristallisationshemmer wirkt, kann bei der Zugabe von aliphatischen Furanoaten reduziert werden, da die aliphatischen Furanoate ebenfalls das Kristallwachstum einschränken und zu einer PET Flasche mit einer akzeptablen Trübung führen, welche ansonsten nur mit einem Zusatz von Isophtalsäure mit bis zu 6 Gew.-% zu erreichen ist.

Als zweckdienlich erweist es sich, wenn die PET Flasche nicht rezykliertes PET enthält. Durch die Zugabe eines Anteils an nicht rezykliertem PET bzw. Virgin PET kann die PET-Barriere-Flasche an besonders hohe Anforderungen bezüglich eines geringen Gelbstichs und einer geringen Trübung angepasst werden und kann trotzdem rezykliert werden.

Als vorteilhaft erweist es sich, wenn die PET Flasche weniger als 1 Gew.-% Polyamid und weniger als 1 Gew.-% Kobaltsalze enthält. Diese geringen Anteile an Polyamid und Kobaltsalze führen zu einer geringen Vergilbung der PET Flasche. Die geringen Anteile an Polyamid und Kobaltsalz lassen sich zumeist nicht vermeiden, da diese durch das Regenerat in die Mischung zur Herstellung der PET Flasche gelangen.

In einer weiteren bevorzugten Ausführungsform der Erfindung enthält die PET Flasche aliphatische Furanoate hergestellt aus Rohstoffen biologischen Ursprungs. Die Herstellung aus natürlichen Rohstoffen, beispielsweise Pflanzenstärke, führt zu Furanoaten, welche unabhängig von Erdölderivaten herstellbar sind. Die aliphatischen Furanoate sind zu 100% biobasierend und verbessern zusätzlich die Ökobilanz (CO2 Bilanz) der Verpackung.

In einer weiteren besonders bevorzugten Ausführungsform der Erfindung besitzt die PET Flasche gegenüber einer PET Flasche, welche ausschliesslich PET enthält, eine um 10% verbesserte Barriere gegenüber Sauerstoff und/oder Kohlendioxid. Die verbesserten Barriereeigenschaften bei gleichzeitiger Rezyklierbarkeit sind der Verwendung von aliphatischen Furanoaten anstatt von Polyamid geschuldet. Die PET-Barriere-Flasche lässt sich trotz ihrer guten Barriereeigenschaften rezyklieren, ohne eine massive Steigerung des Gelbstichs und der Trübung in den Recycling Strom zu bringen.

In einer weiteren bevorzugten Ausführungsform der Erfindung besitzt die PET Flasche eine derartige Wandstärke, dass sie zur Wiederbefüllung bzw. als Mehrwegflasche geeignet ist. Dazu muss der Preform zum Streckblasen der PET Flasche eine Wandstärke zwischen 3 mm und 10 mm besitzen, damit die PET Flasche eine ausreichend dicke Wandstärke besitzt. Durch das Vorhandensein eines aliphatischen Furanoats zwischen 4 Gew.-% und 40 Gew.-% wird die Kristallisationsbildung in dem Preform gehemmt. Die benötigte Wandstärke kann daher realisiert werden, ohne dass die Blasbarkeit des Preforms durch die Kristallisation abnimmt oder durch die Kristallisation zu stark eintrübt.

Ein weiterer Aspekt der Erfindung betrifft ein Verfahren zur Herstellung einer PET-Barriere- Flasche, wie sie in den vorigen Absätzen beschrieben wurde. Dadurch, dass die Mischung von Kunststoffgranulaten rezykliertes PET-Granulat und Granulat aus einem aliphatischen Furanoat enthält, lässt sich eine PET Flasche herstellen, welche rezykliertes PET enthält und eine verbesserte Barriere gegenüber Kohlendioxid uns Sauerstoff aufweist und trotzdem L- und b-Werte aufweist, welche für die meisten Anwendungen akzeptabel sind. Würde die Barriere durch den Zusatz von Polyamid hergestellt werden, so wären die L- und b-Werte einer solchen Flasche nicht mehr akzeptabel und die Flasche müsste ausselektiert werden. Die durch das Verfahren hergestellte PET-Barriere-Flasche lässt sich dem Recycling Strom zuführen, da sie L- und b-Werte aufweist, welche den Grenzwerten genügen, um in dem Recycling Strom verarbeitet werden zu können.

In einer weiteren bevorzugten Ausführungsform der Erfindung beträgt die Temperatur während des Spritzgiessens des Preforms mindestens 270°C und höchstens 300 °C und bevorzugt mindestens 270°C und höchstens 275°C. In diesem Temperaturbereich ist ein ausreichendes Mass an Copolymerisierung und eine geringe Vergilbung sicher gestellt.

In einer weiteren bevorzugten Ausführungsform der Erfindung beträgt die Verweilzeit der Mischung von Kunststoffgranulaten in der Spritzgussmaschine mindestens 30 Sekunden und höchstens 300 Sekunden. In diesem Verweilzeitbereich ist ein ausreichendes Mass an Copolymerisierung und eine geringe Vergilbung sicher gestellt. Eine zu lange Verarbeitungszeit oder eine zu hohe Verarbeitungstemperatur lässt die Mischung viel zu stark vergilben. Im Gegensatz dazu wirkt sich eine zu geringe Verarbeitungstemperatur und Verweilzeit positiv auf die Verhinderung der Vergilbung aus, jedoch findet die Copolymerisierung bei einer zu geringen Arbeitstemperatur und einer zu kurzen Verweilzeit nicht statt.

Bevorzugt ist es, wenn die Mischung von Kunststoffgranulaten vor dem Spritzgiessen bei mehr als 155 °C getrocknet wird. Dadurch wird das Kunststoffgranulat vorerwärmt, wodurch die Verweilzeit in der Extrusionsschnecke verkürzt wird. Daraus folgt, dass die Scherkräfte und der mechanische Abbau in der Extrusionsschnecke so klein wie möglich gehalten werden.

Auch ist es bevorzugt, wenn die Mischung aus Kunststoffgranulaten mit Phosphorsäure versetzt wird. Phosphorsäure wirkt als ein Stabilisator, wodurch der Abbau des Materials und dessen mit dem Abbau verbundenen Vergilbung so klein wie möglich gehalten wird.

In einer weiteren Ausführungsform der Erfindung ist ein Preform zur Herstellung eines Kunststoffbehälters in einem Blasverfahren vorgeschlagen, der einen länglichen, röhrchenartigen Preformkörper aufweist, der an seinem einen Längsende geschlossen ausgebildet ist und an seinem anderen Längsende einen mit einer Ausgiessöffnung versehenen Halsabschnitt aufweist. Erfindungsgemäss ist der Preform aus einer Mischung aus recykliertem PET und aliphatischem

Furanoat hergestellt, wobei der Anteil des aliphatischen Furanoats zwischen 4 Gewichtsprozent und 40 Gewichtsprozent bezogen auf das Gesamtgewicht der Mischung beträgt und das recyklierte PET maximal 2,5 Gewichtsprozent einer Mischung aus Isophthalsäure und Diethylenglykol aufweist, wobei der Anteil an Isophthalsäure maximal 2,0 Gewichtsprozent und der Anteil an Diethylenglykol maximal 2,0 Gewichtsprozent sind, alle Gewichtsprozente auf das Gesamtgewicht des Preforms bezogen sind und eine Trübung des Preforms gemessen nach ASTM D 1003-00 ist durch Beimischung des aliphatischen Furanoats weniger als 5%. Das Furanoat kann beispielsweise Polymethylenfuranoat, Polyethylenfuranoat (PEF), Polypropylenfuranoat, Polybuthylenfuranoat oder Polypenthylenfuranoat, oder ein Gemisch aus unterschiedlichen aliphatischen Furanoaten sein. Dem Gemisch aus recykliertem PET und aliphatischem Furanoat ist keine Isophthalsäure zugesetzt. Allerdings ist in recykliertem PET Isophtalsäure enthalten, die jedoch dem recykliertem PET nicht eigens entzogen wird. Das aliphatische Furanoat ist dem recyklierten PET in einem solchen Anteil beigemischt, dass diese eine Kristallisation während des Abkühlens verhindern, so dass in dem Preformkörper eine Kristallisation nicht nachweisbar ist. So kann die Isophthalsäure auch maximal nur 1% und das Diethylenglykol maximal 1,0% sein, so dass das recyklierte PET maximal 1,5 Gewichtsprozent einer Mischung aus Isophthalsäure und Diethylenglykol aufweist. Der Preform kann spritzgegossen oder auch fliessgepresst sein.

In einer weiteren besonders bevorzugten Ausführungsform der Erfindung hat der Preformkörper mehr als 3 mm und weniger als 10 mm Wandstärke. Der Preform enthält bevorzugt zwischen 4 Gew.-% und 40 Gew.-% eines aliphatischen Furanoats, Das aliphatische Furanoat unterdrückt die Kristallisationsbildung bei dem Preform. Aus dem Preform lassen sich PET-Barriere-Flaschen mittels eines Blasprozesses möglicherweise unter Verwendung einer Reckstange mit einer erhöhten Wandstärke herstellen, welche als Refill Flaschen bzw. als Mehrwegflaschen eingesetzt werden können. Die aus dem Preform hergestellte PET-Barriere-Flasche hat gemessen nach der ASTM D 1003 - 00 weniger als 5% haze (Trübung).

Gemäß einem weiteren Ausführungsbeispiel der Erfindung ist ein Verfahren zur Herstellung eines Preforms vorgeschlagen, bei welchem eine Mischung von Kunststoffgranulaten bereitgestellt wird und ein Preform durch Spritzgiessen aus der Mischung hergestellt wird. Die Mischung von Kunststoffgranulaten besteht aus recykliertem PET und einem aliphatischem Furanoat, wobei das recyklierte PET maximal 2,5 Gewichtsprozent einer Mischung aus Isophthalsäure und Diethylenglykol aufweist, wobei der Anteil an Isophthalsäure maximal 2,0 Gewichtsprozent und der Anteil an Diethylenglykol maximal 2,0 Gewichtsprozent sind, wobei alle Gewichtsprozente auf das Gesamtgewicht des Preforms bezogen sind. Eine Trübung des Preforms ist gemessen nach ASTM D 1003-00 durch Beimischung des aliphatischen Furanoats weniger als 5%.

Ein weiterer Aspekt der Erfindung betrifft ein Regenerat, welches PET und aliphatische Furanoate enthält. Diese Regenerate können aus PET-Barriere-Flaschen stammen, welche den Recycling Strom nicht zusätzlich eintrüben, da sie eine viel geringere Vergilbung als PET-Barriere-Flaschen mit Polyamid aufweisen.

Mit Vorteil ist das das Regenerat wenigstens teilweise aus PET-Barriere-Flaschen gemäss der obigen Beschreibung hergestellt. Diese PET-Barriere-Flaschen sind zum Recycling zugelassen und werden aus dem Recycling Strom nicht ausgefiltert, da sie den Recycling Strom nicht zusätzlich eintrüben.

Zweckmässigerweise enthält das Regenerat nicht rezyklierte aliphatische Furanoate. Diese neu hergestellten (Virgin) aliphatischen Furanoate können das Regenerat ergänzen, um die Barriereeigenschaften zu verbessern.

Gemäß einem weiteren Ausführungsbeispiel der Erfindung ist eine Mischung aus recykliertem PET und aliphatischem Furanoat vorgeschlagen. Das recyklierte PET weist maximal 2,5 Gewichtsprozent einer Mischung aus Isophthalsäure und Diethylenglykol auf. Der Anteil an Isophthalsäure ist maximal 2,0 Gewichtsprozent und der Anteil an Diethylenglykol ist maximal 2,0 Gewichtsprozent, wobei alle Gewichtsprozente auf das Gesamtgewicht des Preforms bezogen sind. Da, wie bereits ausgeführt, die Anteile an Isophthalsäure und an Diethylenglykol dem recykliertem PET entspringen und nicht extra zugeführt werden, können die Anteile für Isophthalsäure und Diethylenglykol je 1,0 Gewichtsprozent sein, wobei das recyklierte PET maximal 1,5 Gewichtsprozent einer Mischung aus Isophthalsäure und Diethylenglykol aufweist. Der Begriff "Mischung" ist im Rahmen der vorliegenden Offenbarung auch als "Regenerat" bezeichnet. Vielfach hierfür sind auch die Begriffe "Blend" und "Abmischung" gebräuchlich.

Gemäß einem weiteren Ausführungsbeispiel der Erfindung ist der Anteil des aliphatischen Furanoats an der Mischung zwischen 4 Gewichtsprozent und 40 Gewichtsprozent bezogen auf das Gesamtgewicht der Mischung.
(001) PET-Barriere-Flasche, welche rezykliertes PET beinhaltet, dadurch gekennzeichnet, dass die PET-Barriere-Flasche ein aliphatisches Furanoat, beispielsweise Polymethylenfuranoat, Polyethylenfuranoat (PEF), Polypropylenfuranoat, Polybuthylenfuranoat oder Polypenthylenfuranoat, oder mehrere unterschiedliche aliphatische Furanoate enthält.
(002) PET-Barriere-Flasche nach Absatz (001), dadurch gekennzeichnet, dass die PET-Barriere-Flasche mehr als 30 Gew.-%, bevorzugt mehr als 40 Gew.-% und besonders bevorzugt mehr als 50 Gew.-% rezykliertes PET enthält.
(003) PET-Barriere-Flasche nach Absatz (001) oder (002), dadurch gekennzeichnet, dass die PET-Barriere-Flasche zwischen 4 Gew.-% und 40 Gew.-% eines aliphatischen Furanoats enthält oder mehrere unterschiedliche aliphatische Furanoate enthält, wobei deren Summe zwischen 4 Gew.-% und 40 Gew.-% beträgt.
(004) PET-Barriere-Flasche nach einem der Absätze (001 bis (003), dadurch gekennzeichnet, dass die PET-Barriere-Flasche weniger als 2 Gew.-% Isophtalsäure enthält.
(005) PET-Barriere-Flasche nach einem der Absätze (001 bis (004), dadurch gekennzeichnet dass die PET-Barriere-Flasche nicht rezykliertes PET enthält.
(006) PET-Barriere-Flasche nach einem der Absätze (001 bis (005), dadurch gekennzeichnet das die PET-Barriere-Flasche weniger als 1 Gew.-% Polyamid und weniger als 1 Gew.-% Kobaltsalze enthält.
(007) PET-Barriere-Flasche nach einem der Absätze (001 bis (006), dadurch gekennzeichnet dass die PET-Barriere-Flasche aliphatische Furanoate hergestellt aus Rohstoffen biologischen Ursprungs enthält.
(008) PET-Barriere-Flasche nach einem der Absätze (001 bis (007), dadurch gekennzeichnet dass die PET-Barriere-Flasche gegenüber einer PET Flasche, welche ausschliesslich PET enthält, eine um 10% verbesserte Barriere gegenüber Sauerstoff und/oder Kohlendioxid besitzt.
(009) PET-Barriere-Flasche nach einem der Absätze (001 bis (008), dadurch gekennzeichnet dass die PET-Barriere-Flasche eine derartige Wandstärke besitzt, dass sie zur Wiederbefüllung bzw. als Mehrwegflasche geeignet ist.
(010) Verfahren zur Herstellung einer PET-Barriere-Flasche gemäss einem der Absätze (001) bis (009) bei welchem
   - eine Mischung von Kunststoffgranulaten bereitgestellt wird,
   - ein Preform durch Spritzgiessen aus der Mischung hergestellt wird und
   - die PET-Barriere-Flasche durch Streckblasen aus dem Preform hergestellt wird, dadurch gekennzeichnet,
   dass die Mischung von Kunststoffgranulaten rezykliertes PET-Granulat und Granulat aus einem aliphatischen Furanoat enthält.
(011) Verfahren nach Absatz (010), dadurch gekennzeichnet, dass die Temperatur während des Spritzgiessens des Preforms mindestens 270°C und höchstens 300 °C beträgt und bevorzugt mindestens 270°C und höchstens 275°C beträgt.
(012) Verfahren nach einem der Absätze (010) oder (011), dadurch gekennzeichnet, dass die Verweilzeit der Mischung von Kunststoffgranulaten in der Spritzgussmaschine mindestens 30 Sekunden und höchstens 300 Sekunden beträgt.
(013) Verfahren nach einem der Absätze (010) bis (012), dadurch gekennzeichnet, dass die Mischung von Kunststoffgranulaten vor dem Spritzgiessen bei mehr als 155 °C getrocknet wird.
(014) Verfahren nach einem der Absätze (010) bis (013), dadurch gekennzeichnet, dass die Mischung aus Kunststoffgranulaten mit Phosphorsäure versetzt wird.
(0015) Verfahren nach einem der Absätze (010) bis (014), dadurch gekennzeichnet, dass der Preform mehr als 3 mm und weniger als 10 mm Wandstärke hat.
(0016) Regenerat, welches PET und aliphatische Furanoate enthält.
(0017) Regenerat nach Absatz (0016), dadurch gekennzeichnet, dass das Regenerat wenigstens teilweise aus PET-Barriere-Flaschen gemäss einem der Ansprüche 1 bis 9 hergestellt ist.
(018) Regenerat nach Absatz (016) oder (017), dadurch gekennzeichnet, dass das Regenerat nicht rezyklierte aliphatische Furanoate enthält.

Einem Fachmann ist hierbei klar, dass, wo sinnvoll, Merkmale der Gegenstände auch Merkmale der Verfahren sein können, und umgekehrt.

Weitere Vorteile und Merkmale ergeben sich aus der nachfolgenden Beschreibung eines Ausführungsbeispiels der Erfindung.

Die Erfindung betrifft eine PET-Barriere-Flasche, welche aus wenigstens 50 Gew.-% PET Regenerat bzw. rezykliertem PET hergestellt ist. Unter PET Regenerat soll im Rahmen dieser Anmeldung ein PET Rohstoff verstanden werden, welcher aus bereits verwendeten PET Flaschen hergestellt wird. Das PET Regenerat kann als Granulat oder als durch Zerkleinerung der Flaschen erhaltenen Schnitzeln zu Verfügung stehen. Das PET Regenerat stammt zu 100% aus bereits gebrauchtem PET, insbesondere PET Flaschen. Neu produziertes PET, sogenanntes Virgin-PET, ist in dem PET Regenerat nicht vorhanden. Je öfter das PET Regenerat dem Recycle-Zyklus zugeführt wird, umso stärker vergilbt es, vergrünt es und verdunkelt und trübt sich. Dies liegt zum einen an Verunreinigungen, welche sich in dem PET Regenerat zwangsläufig anreichern. Die Verunreinigungen können Glassplitter, andere Polymere, Sandkörner usw. sein. Die Verunreinigungen führen selbst und als Kristallisationskeime für die Kristallisation des PETs zur Trübung und zu einem Gelbstich und Grünstich des PET Regenerats.

Zusätzlich wird das PET Regenerat mit jeder weiteren Verarbeitung gelblicher und grünlicher.

Beinhaltet die PET Flasche einen Zusatz von Polyamid, so führt das Polyamid zu einer verbesserten Barriere der PET Flasche gegenüber Sauerstoff und Kohlendioxid. Das Polyamid vergilbt jedoch deutlich stärker als das PET. Deshalb werden PET Flaschen, die Polyamide enthalten, vor oder beim Recycling aussortiert, beispielweise durch optische Sensoren (Kontrollsysteme) die z.B. durch Laser oder Infrarot die Spektren der Flaschen oder Flakes identifizieren oder gelbliche oder trübe Flaschen oder Flakes ausscheiden.

Die PET-Barriere-Flasche besitzt bei einem Füllvolumen von 500 ml bevorzugt eine Barriere gegenüber Sauerstoff, welche dadurch definiert ist, dass die Sauerstoffzunahme ins Innere der Flasche innerhalb von 11 Tagen 1 ppm Sauerstoff beträgt. Die PET-Barriere-Flasche besitzt bei einem Füllvolumen von 500 ml bevorzugt eine Barriere gegenüber Kohlendioxid, welche dadurch definiert ist, dass innerhalb von 11 Wochen 20 Gew.-% Kohlendioxid aus dem Inneren der Flasche entweicht. Die aliphatischen Furanoate bewirken, dass die Kohlendioxid- und/oder die Sauerstoff-Barriere gegenüber regulärem PET um mindestens 10% erhöht wird. In dem Ausführungsbeispiel kommt es bei einer vergleichbaren PET Flasche mit 500 ml Füllvolumen, welche ausschliesslich PET enthält, zu einer Sauerstoffzunahme ins Innere der Flasche von 1 ppm Sauerstoff innerhalb von 10 Tagen. In dem Ausführungsbeispiel kommt es bei einer vergleichbaren PET Flasche mit 500 ml Füllvolumen, welche ausschliesslich PET enthält, entsprechend zu einer Kohlendioxidabnahme im Inneren der Flasche von 20 Gew.-% Kohlendioxid innerhalb von 10 Wochen.

Der Rösttest wird verwendet um spezielle Flaschen zu identifizieren, die besonders dem Recycling Strom durch Vergilbung und Eintrübung schaden. Die Ergebnisse des Rösttests werden herangezogen, um die optischen Ausscheide Sensoren speziell auf diese Flaschen anzulernen und einzustellen.

Das zugesetzte Polyamid bewirkt auch eine Eintrübung der PET Flasche da dieses kleine Polyamid Domänen in der PET Matrix bildet, an denen das Licht gestreut wird.

Zusätzlich können in den PET Flaschen Katalysatoren (zum Beispiel Kobaltsalze) vorhanden sein, welche das Polyamid aber auch das PET zur Oxidation bewegen. Dadurch wird das Füllgut vor der Reaktion mit Luftsauerstoff geschützt, da dieser mit der Verpackung reagiert. Allerdings führt diese Oxidationsreaktion auch zu einer Vergilbung der PET Flasche bzw. der PET Verpackung.

In allen Beispielen ist die Vergilbung des PETs oxidativen und thermischen Abbaureaktionen des PETs selbst, Additiven darin oder Regeneraten darin geschuldet. Demnach führt jede Bearbeitung des PET in einer Spritzgussmaschine oder einem Recycling Extruder zu einer weiteren Vergilbung.

In überraschender Weise lässt sich PET Rezyklat mit aliphatischen Furanoaten verbinden. Nach Mischung der Granulate oder der PET Rezyklatzerkleinerungen mit dem Furanoat Granulat bilden diese beim Aufschmelzen während des Spritzgussprozesses eine Copolymerisierung. Die Copolymerisierung bewirkt auch, dass die Trübung verkleinert wird, da die Copolymerisierung der Kristallbildung entgegenwirkt und aliphatische Furanoate im Gegensatz zu Polyamid keine Domänen in der PET Matrix bildet, sondern mit der PET Matrix reagiert.

Der Fachmann würde eine Kombination von PET Rezyklat mit aliphatischen Furanoaten nicht in Betracht ziehen, da aliphatische Furanoate oft selbst bei der Verarbeitung stark vergilben bzw. im PET Domänen ausbilden und würde die aliphatischen Furanoate als Kontamination ansehen.

Dies nicht zu Unrecht, da eine zu lange Verarbeitungszeit oder eine zu hohe Verarbeitungstemperatur die Mischung aus Regenerat und aliphatischen Furanoaten viel zu stark vergilben lässt. Mit einer längeren Verarbeitungszeit oder einer erhöhten Verarbeitungstemperatur werden die Copolymerisierung und die Transparenz jedoch verbessert. Im Gegensatz dazu wirkt sich eine zu geringe Verarbeitungstemperatur und Verweilzeit positiv auf die Verhinderung der Vergilbung aus, jedoch findet die Copolymerisierung bei einer zu geringen Arbeitstemperatur nicht statt.

Als bevorzugte Verarbeitungstemperatur haben sich Temperaturen von 270 bis 300°C, und Verweilzeiten von 30 bis 300sec in der Preform-Spritzgussmaschine herausgestellt, um ein ausreichendes Mass an Copolymerisierung und eine geringe Vergilbung zu erreichen.

Neben dem bevorzugten Polyethylenfuranoat können auch andere aliphatische Furanoate in der Mischung mit PET Rezyklat verwendet werden. Dies kann beispielsweise Polymethylenfuranoat, Polypropylenfuranoat, Polybuthylenfuranoat oder Polypenthylenfuranoat, oder eine Mischung mehrerer unterschiedlicher aliphatischer Furanoate sein.

Die mit der Mischung aus PET Rezyklat und aliphatischen Furanoaten hergestellten PET Flaschen besitzen ähnlich gute Barriere Eigenschaften, welche mit PET Flaschen versetzt mit Polyamid erzielt werden. Die PET Flaschen, welche PET Rezyklat und aliphatische Furanoate enthalten können im Gegensatz zu PET Flaschen versetzt mit Polyamid rezykliert werden, da sie viel weniger vergilben als das Polyamid. Demnach ist es durch die vorliegende Erfindung möglich PET Flaschen mit Barriere dem Recycling Strom zuzusetzen.

Bevorzugt enthält die Mischung zur Herstellung der PET Flasche bevorzugt mehr als 50 Gew.-% PET Rezyklat und bevorzugt zwischen 4 und 40 Gew.-% aliphatische Furanoate. Falls sich das PET Rezyklat und das aliphatische Furanoat nicht zu 100 Gew.-% ergänzen kann die Mischung zusätzlich Virgin PET, also unrezykliertes PET enthalten.

Durch die Zugabe eines aliphatischen Furanoats zu der Mischung besitzt die PET Flasche einen sehr guten b- und L-Wert. Es ist ein b- Wert von kleiner als 5 und ein L-Wert von grösser als 76 erzielbar. Diese Spezifikationen zeigen, dass der Gelbstich und das Mass der Dunkelheit in Bereichen liegen, welche für PET Flaschen akzeptabel sind und den Recycling Strom nicht zusätzlich vergilben und eintrüben.

Während dem Spritzgiessen des Preforms, welcher zur Herstellung der PET Flasche streckgeblasen wird, wird die Mischung aus PET Rezyklat und aliphatischem Furanoat bevorzugt unter 300°C und mit einer Verweilzeit in der Spritzgussmaschine von bevorzugt weniger als 100 Sekunden belastet. Dadurch wird die Belastung der Mischung, welche zu thermischen Abbaureaktionen und einer damit verbundenen starken Vergilbung führen, reduziert. Die thermischen Abbaureaktionen können auch dadurch reduziert werden, dass die Mischung aus PET Rezyklat und aliphatischem Furanoat vor der Verarbeitung in der Spritzgussmaschine bei einer Temperatur von über 155°C getrocknet wird. Dadurch werden Scherkräfte und der thermische Abbau in der Spritzgussmaschine ebenfalls möglichst klein gehalten. Auch ein Zusatz von Phosphorsäure zu der Mischung bewirkt eine Reduzierung des thermischen Abbaus.

Beträgt die Wandstärke des Preforms mehr als 2 mm, neigt das PET Homopolymer zu starker Kristallbildung. Der kristallisierte Preform wäre also überhaupt nicht mehr blasbar. Dem PET wird deshalb üblicherweise bis zu 3 Gew.-% Diethylenglykol und bis zu 6 Gew.-% Isophtalsäure zugegeben. Dadurch wird die Kristallbildung gehemmt.

Die vorliegende PET Flasche enthält bevorzugt weniger als 1 Gew.-% Isophtalsäure, da das aliphatische Furanoat durch seine hervorragenden Copolymerisierungseigenschaften mit PET als Kristallisationshemmer wirkt.

## Patentansprüche

1. Preform zur Herstellung eines Kunststoffbehälters in einem Blasverfahren mit einem länglichen, röhrchenartigen Preformkörper, der an seinem einen Längsende geschlossen ausgebildet ist und an seinem anderen Längsende einen mit einer Ausgiessöffnung versehenen Halsabschnitt aufweist, aus einer Mischung von Kunststoffgranulaten enthaltend mehr als 30 Gew.-%, bevorzugt mehr als 40 Gew.-% und besonders bevorzugt mehr als 50 Gew.-% recykliertes PET und aliphatischem Furanoat wobei der Anteil des aliphatischen Furanoats zwischen 4 Gewichtsprozent und 40 Gewichtsprozent bezogen auf das Gesamtgewicht der Mischung beträgt und das recyklierte PET maximal 2,5 Gewichtsprozent einer Mischung aus Isophthalsäure und Diethylenglykol aufweist, wobei der Anteil an Isophthalsäure maximal 2,0 Gewichtsprozent und der Anteil an Diethylenglykol maximal 2,0 Gewichtsprozent sind, alle Gewichtsprozente auf das Gesamtgewicht des Preforms bezogen sind und eine Trübung des Preforms gemessen nach ASTM D 1003-00 durch Beimischung des aliphatischen Furanoats weniger als 5% ist.

2. Preform nach Anspruch 1, wobei der Preformkörper eine Wanddicke aufweist, die zwischen 3mm und 10mm ist.

3. Preform nach einem der vorhergehenden Ansprüche, wobei der Preform zur Ausbildung eines Mehrwege-Behältnisses ausgebildet ist.

4. PET-Barriere-Flasche hergestellt aus einem Preform nach einem der Ansprüche 1 bis 3.

5. PET-Barriere-Flasche nach Anspruch 4, wobei die PET-Barriere-Flasche einen b-Wert kleiner als 5 und einen L-Wert größer als 76 aus dem CIELAB-Farbraum aufweist.

6. PET-Barriere-Flasche nach Anspruch 4 oder 5, wobei die PET Flasche weniger als 1 Gew.-% Polyamid und weniger als 1 Gew.-% Kobaltsalze enthält.

7. PET-Barriere-Flasche nach einem der Ansprüche 4 bis 6, **dadurch gekennzeichnet, dass** die PET -Barriere-Flasche eine derartige Wandstärke besitzt, dass sie zur Wiederbefüllung bzw. als Mehrwegflasche geeignet ist.

8. PET-Barriere-Flasche nach einem der Ansprüche 4 bis 7, **dadurch gekennzeichnet, dass** die PET -Barriere-Flasche weniger als 2 Gew.-% Isophtalsäure enthält.

9. Verfahren zur Herstellung eines Preforms gemäss einem der Ansprüche 1 bis 3, bei welchem
- eine Mischung von Kunststoffgranulaten bereitgestellt wird, und
- ein Preform durch Spritzgiessen aus der Mischung hergestellt wird,
**dadurch gekennzeichnet,**
**dass** die Mischung von Kunststoffgranulaten mehr als 30 Gew.-%, bevorzugt mehr als 40 Gew.-% und besonders bevorzugt mehr als 50 Gew.-% recykliertes PET und ein aliphatisches Furanoatenthält, wobei das recyklierte PET maximal 2,5 Gewichtsprozent einer Mischung aus Isophthalsäure und Diethylenglykol aufweist, wobei der Anteil an Isophthalsäure maximal 2,0 Gewichtsprozent und der Anteil an Diethylenglykol maximal 2,0 Gewichtsprozent sind, wobei alle Gewichtsprozente auf das Gesamtgewicht des Preforms bezogen sind, wobei eine Trübung des Preforms gemessen nach ASTM D 1003-00 durch Beimischung des aliphatischen Furanoats weniger als 5% ist.

10. Verfahren nach Anspruch 9, wobei die Temperatur während des Spritzgiessens des Preforms mindestens 270°C und höchstens 300 °C beträgt.

11. Verfahren nach Anspruch 9 oder 10, wobei die Temperatur während des Spritzgiessens des Preforms mindestens 270°C und höchstens 275°C beträgt.

12. Verfahren nach einem der Ansprüche 9 bis 11, wobei die Verweilzeit der Mischung von Kunststoffgranulaten in der Spritzgussmaschine mindestens 30 Sekunden und höchstens 300 Sekunden.

13. Verfahren nach einem der Ansprüche 9 bis 12, wobei die Verweilzeit der Mischung von Kunststoffgranulaten in der Spritzgussmaschine weniger als 100 Sekunden beträgt.

14. Verfahren nach einem der Ansprüche 9 bis 13, wobei die Mischung von Kunststoffgranulaten vor dem Spritzgiessen bei mehr als 155 °C getrocknet wird.

15. Verfahren nach einem der Ansprüche 9 bis 14, wobei die Mischung aus Kunststoffgranulaten mit Phosphorsäure versetzt wird.

16. Verfahren nach einem der Ansprüche 9 bis 15, wobei dem Gemisch aus recykliertem PET und aliphatischem Furanoat keine Isophthalsäure zugesetzt wird.

## Claims

1. Preform for manufacturing a plastic container in a blow molding process with an elongated preform body in the art of a small tube that is closed at its one longitudinal end and that has a neck portion provided with a spout at its other longitudinal end, from a mixture of plastic granulates containing more than 30% by weight, preferably more than 40% by weight and more preferably more than 50% by weight recycled PET and aliphatic furanoate, wherein the amount of the aliphatic furanoate is between 4 weight percent and 40 weight percent with reference to the total weight of the mixture and the recycled PET has maximally 2,5 weight percent of a mixture of isophthalic acid and diethylenglycol, wherein the amount of isophthalic acid is maximally 2,0 weight percent and the amount of diethylenglycol maximally 2,0 weight percent, all weight percentages are referred to the total weight of the preform and a turbidity of the preform measured according to ASTM D 1003-00 by addition of the aliphatic furanoate is less than 5%.

2. Preform according to claim 1, wherein the preform body has a wall thickness that is between 3 mm and 10 mm.

3. Preform according to one of the preceding claims, wherein the preform is configured to form a reusable container.

4. PET barrier bottle manufactured from a preform according to one of the claims 1 to 3.

5. PET barrier bottle according to claim 4, wherein the PET barrier bottle has a b-value less than 5 and a L value more than 76 from the CIELAB color space.

6. PET barrier bottle according to claim 4 or 5, wherein the PET bottle contains less than 1 weight percent polyamide and less than 1 weight percent cobalt salts.

7. PET barrier bottle according to one of the claims 4 to 6, **characterized in that** the PET barrier bottle has such a wall thickness that it is appropriate for refilling or as reusable bottle.

8. PET barrier bottle according to one of the claims 4 to 7, **characterized in that** the PET barrier bottle contains less than 2 weight percent isophthalic acid.

9. Method for manufacturing a preform according to one of the claims 1 to 3 for which
- a mixture of plastic granules is made available and
- a preform is manufactured by injection molding from the mixture,
**Characterized in**
**That** the mixture of plastic granules contains more than 30 weight percent, preferably more than 40 weight percent and particularly preferably more than 50 weight percent recycled PET and an aliphatic furanoate, wherein the recycled PET has maximally 2,5 weight percent of a mixture of isophthalic acid and diethylenglycol, wherein the amount of isophthalic acid is maximally 2,0 weight percent and the amount of diethylenglycol maximally 2,0 weight percent, all weight percentages are referred to the total weight of the preform and a turbidity of the preform measured according to ASTM D 1003-00 by addition of the aliphatic furanoate is less than 5%.

10. Method according to claim 9, wherein the temperature during the injection molding of the preform is at least 270°C and maximally 300°C.

11. Method according to claim 9 or 10, wherein the temperature during the injection molding of the preform is at least 270°C and maximally 275°C.

12. Method according to one of the claims 9 to 11, wherein the dwell time of the mixture of plastic granules in the injection molding machine is at least 30 seconds and maximally 300 seconds.

13. Method according to one of the claims 9 to 12, wherein the dwell time of the mixture of plastic granules in the injection molding machine is less than 100 seconds.

14. Method according to one of the claims 9 to 13, wherein the mixture of plastic granules is dried before the injection molding at more than 155°C.

15. Method according to one of the claims 9 to 14, wherein phosphoric acid is added to the mixture of plastic granules.

16. Method according to one of the claims 9 to 15, wherein no isophthalic acid is added to the mixture of recycled PET and aliphatic furanoate.

## Revendications

1. Préforme pour la fabrication d'un récipient en matière plastique par un procédé de soufflage avec un corps de préforme de type petit tube allongé, qui est configuré fermé à l'une de ses extrémités longitudinales et qui présente, à son autre extrémité longitudinale une portion de col pourvue d'une ouverture verseuse, en un mélange de granulés de matière plastique qui contient plus de 30% en poids, de préférence plus de 40% en poids et de manière particulièrement préférée plus de 50% en poids de PET recyclé et de furanoate aliphatique, la part de furanoate aliphatique étant de l'ordre de 4% en poids et de 40% en poids par rapport au poids total du mélange et le PET recyclé présentant un maximum de 2,5% d'un mélange d'acide isophtalique et de diéthylèneglycol, la part d'acide isopthalique étant d'au maximum 2,0% en poids et la part de diéthylèneglycol étant d'au maximum 2,0% en poids, tous les pourcentages de poids se rapportant au poids total de la préforme et une turbidité de la préforme mesurée selon ASTM D 1003-00 par addition du furanoate aliphatique étant inférieure à 5%.

2. Préforme selon la revendication 1, le corps de préforme présentant une épaisseur de paroi qui est située entre 3 mm et 10 mm.

3. Préforme selon l'une des revendications précédentes, la préforme étant configurée pour former un récipient réutilisable.

4. Bouteille à barrière en PET fabriquée à partir d'une préforme selon l'une des revendications 1 à 3.

5. Bouteille à barrière en PET selon la revendication 4, la bouteille à barrière en PET présentant une valeur b inférieure à 5 et une valeur L supérieure à 76 de l'espace chromatique CIELAB.

6. Bouteille à barrière en PET selon la revendication 4 ou 5, la bouteille en PET contenant moins de 1% en poids de polyamide et moins de 1% en poids de sels de cobalt.

7. Bouteille à barrière en PET selon l'une des revendications 4 à 6, **caractérisée en ce que** la bouteille à barrière en PET possède une épaisseur de paroi telle qu'elle est appropriée pour être remplie à nouveau ou comme bouteille réutilisable.

8. Bouteille à barrière en PET selon l'une des revendications 4 à 7, **caractérisée en ce que** la bouteille à barrière en PET contient moins de 2% en poids d'acide isophtalique.

9. Procédé pour la fabrication d'une préforme selon l'une des revendications 1 à 3 pour lequel
- un mélange de granulés de matière plastique est mis à disposition et
- une préforme est fabriquée par moulage par injection à partir du mélange,
**caractérisé en ce**
**que** le mélange de granulés de matière plastique présente plus de 30% en poids, de préférence plus de 40% en poids et de manière particulièrement préférée plus de 50% en poids de PET recyclé et un furanoate aliphatique, le PET recyclé présentant un maximum de 2,5% d'un mélange d'acide isophtalique et de diéthylèneglycol, la part d'acide isopthalique étant d'au maximum 2,0% en poids et la part de diéthylèneglycol étant d'au maximum 2,0% en poids, tous les pourcentages de poids se rapportant au poids total de la préforme, une turbidité de la préforme mesurée selon ASTM D 1003-00 par addition du furanoate aliphatique étant inférieure à 5%.

10. Procédé selon la revendication 9, la température pendant le moulage par injection de la préforme étant d'au moins 270°C et de maximum 300°C.

11. Procédé selon la revendication 9 ou 10, la température pendant le moulage par injection de la préforme étant d'au moins 270°C et de maximum 275°C.

12. Procédé selon l'une des revendications 9 à 11, le temps de séjour du mélange de granulés de matière plastique dans la machine de moulage par injection étant d'au moins 30 secondes de maximum 300 secondes.

13. Procédé selon l'une des revendications 9 à 12, le temps de séjour du mélange de granulés de matière plastique dans la machine de moulage par injection étant inférieur à 100 secondes.

14. Procédé selon l'une des revendications 9 à 13, le mélange de granulés de matière plastique étant séché avant le moulage par injection par plus de 155°C.

15. Procédé selon l'une des revendications 9 à 14, de l'acide phosphorique étant ajouté au mélange de granulés de matière plastique.

16. Procédé selon l'une des revendications 9 à 15, le mélange de PET recyclé et de furanoate aliphatique ne contenant pas d'addition d'acide isopthalique.
